(19) Europäisches Patentamt
European Patent Office
Office européen des brevets

(11) **EP 2 107 225 B1**

(12) **EUROPEAN PATENT SPECIFICATION**

(45) Date of publication and mention
of the grant of the patent:
**27.04.2011 Bulletin 2011/17**

(51) Int Cl.:
*F02B 37/18* (2006.01)          *F02D 23/02* (2006.01)
*F02D 13/02* (2006.01)          *F02D 41/22* (2006.01)
*F02B 39/16* (2006.01)

(21) Application number: **09156821.2**

(22) Date of filing: **31.03.2009**

(54) **Internal combustion engine and method for controlling the internal combustion engine**

Verbrennungsmotor und Verfahren zur Steuerung eines Verbrennungsmotors

Moteur à combustion interne et procédé pour contrôler le moteur à combustion interne

(84) Designated Contracting States:
**DE FR**

(30) Priority: **31.03.2008 JP 2008091410**

(43) Date of publication of application:
**07.10.2009 Bulletin 2009/41**

(73) Proprietor: **Toyota Jidosha Kabushiki Kaisha
Toyota-shi, Aichi 471-8571 (JP)**

(72) Inventor: **Hattori, Masayoshi
Toyota-shi, Aichi-ken 471-8571 (JP)**

(74) Representative: **Intès, Didier Gérard André et al
Cabinet Beau de Loménie
158, rue de l'Université
75340 Paris Cedex 07 (FR)**

(56) References cited:
**US-A- 6 155 050          US-A1- 2007 289 302
US-A1- 2008 011 278**

**Description**

BACKGROUND OF THE INVENTION

1. Field of the Invention

The invention relates to an internal combustion engine that includes a turbocharger which is driven by exhaust gas and which compresses air that is taken into a combustion chamber, a bypass passage through which the exhaust gas bypasses the turbocharger when flowing through an exhaust passage, and a wastegate valve which is provided in the bypass passage and which adjusts a flow passage area of the bypass passage, and a method for controlling the internal combustion engine.

2. Description of the Related Art

An internal combustion engine of the above-mentioned type is described in, for example, Japanese Patent Application Publication No. 2004-19449 (JP-A-2004-19449). In the internal combustion engines of the above-mentioned type, for example, in the internal combustion engine described in JP-A-2004-19449, when a charging pressure achieved by a turbocharger is lower than a predetermined pressure, a wastegate valve is closed so that the entirety of the exhaust gas discharged from a combustion chamber is applied to a turbine wheel of the turbocharger. On the other hand, when a charging pressure achieved by the turbocharger is equal to or higher than the predetermined pressure, the wastegate valve is opened so that part of the exhaust gas discharged from the combustion chamber is introduced into a bypass passage. In this way, the pressure of the exhaust gas that is applied to the turbine wheel of the turbocharger is decreased. Thus, an excessive increase in the charging pressure is avoided.

However, if the actual opening amount of the wastegate valve deviates from the regular opening amount of the wastegate valve, which is achieved when it operates properly, it is difficult to control the wastegate valve accurately. As a result, it is not possible to accurately control the pressure of the exhaust gas that is applied to the turbine wheel of the turbocharger, that is, it is not possible to accurately control the charging pressure. This creates a possibility that the power output from the engine will be excessively increased or excessively decreased.

SUMMARY OF THE INVENTION

The invention provides an internal combustion engine and an engine control method with which excessive fluctuation of the power output from the internal combustion engine is avoided when an actual opening amount of a wastegate valve deviates from a regular opening amount that is achieved when the wastegate valve operates properly.

The invention relates to an internal combustion engine that includes a turbocharger which is driven by exhaust gas and which compresses air that is taken into a combustion chamber, a bypass passage through which the exhaust gas bypasses the turbocharger when flowing through an exhaust passage, and a wastegate valve which is provided in the bypass passage and which adjusts the flow passage area of the bypass passage. The internal combustion engine according to the invention further includes: a variable valve mechanism that adjusts the manner of opening and closing an engine valve; determination means for determining whether the actual opening amount of the wastegate valve deviates from the regular opening amount which is achieved when the wastegate valve operates properly; and control means for controlling the variable valve mechanism. When the determination means determines that the actual opening amount of the wastegate valve deviates from the regular opening amount, the control means controls the variable valve mechanism in such a manner that the pressure of the exhaust gas that is discharged from the combustion chamber approaches the pressure of the exhaust gas which is exhibited when the actual opening amount of the wastegate valve agrees with the regular opening amount.

According to the invention, when it is determined that the actual opening amount of the wastegate valve deviates from the regular opening amount, the variable valve mechanism is controlled in such a manner that the pressure of the exhaust gas that is discharged from the combustion chamber approaches the pressure of the exhaust gas which is exhibited when the actual opening amount of the wastegate valve agrees with the regular opening amount. Accordingly, when the actual opening amount of the wastegate valve deviates from the regular opening amount, excessive fluctuation of the power output from the engine is avoided.

In the internal combustion engine according to a preferred embodiment of the invention, when the determination means determines that the actual opening amount of the wastegate valve is smaller than the regular opening amount, the control means may control the variable valve mechanism in such a manner that the pressure of the exhaust gas that is discharged from the combustion chamber is decreased.

The pressure of the exhaust gas that is applied to the turbocharger is higher and the charging pressure is higher when the actual opening amount of the wastegate valve is smaller than the regular opening amount than when the actual opening amount of the wastegate valve agrees with the regular opening amount. As a result, the power output from the engine excessively increases.

However, with the configuration described above, when it is determined that the actual opening amount of the wastegate valve is smaller than the regular opening amount, the variable valve mechanism is controlled in such a manner that the pressure of the exhaust gas that is discharged from the combustion chamber is decreased. Thus, the pressure of the exhaust gas that is applied to the turbocharger is decreased, and an increase in the charging pressure is suppressed. Accordingly, when the actual opening amount of the wastegate valve is smaller than the regular opening amount, an excessive increase in the power output from the engine is avoided.

In the internal combustion engine that has the above-described configuration, when it is not determined that the actual opening amount of the wastegate valve is smaller than the regular opening amount, the control means may control the variable valve mechanism based on a target manner of opening and closing the engine valve, which is calculated based on an engine operating state. On the other hand, when it is determined that the actual opening amount of the wastegate valve is smaller than the regular opening amount, the control means may correct the target manner of opening and closing the engine valve in such a manner that the pressure of the exhaust gas that is discharged from the combustion chamber is decreased, and may control the variable valve mechanism based on the corrected target manner of opening and closing the engine valve.

In the internal combustion engine that has the above-described configuration, the variable valve mechanism may be an intake valve timing adjustment mechanism that adjusts closing timing of an intake valve, which is used as the manner of opening and closing the engine valve. When it is determined that the actual opening amount of the wastegate valve is smaller than the regular opening amount, the control means may advance the closing timing of the intake valve relative to target closing timing that is calculated based on the engine operating state, and may control the intake valve timing adjustment mechanism based on the corrected target closing timing.

With the configuration described above, the amount of air that is taken in the combustion chamber via the intake valve is decreased by an amount that corresponds to an amount by which the closing timing of the intake valve is advanced relative to target closing timing, that is, an amount by which the intake valve is closed earlier than the target closing timing. Thus, the combustion pressure is decreased, and the pressure of the exhaust gas that is discharged from the combustion chamber is decreased.

In the internal combustion engine that has the above-described configuration, the variable valve mechanism may be an exhaust valve timing adjustment mechanism that adjusts closing timing of an exhaust valve, which is used as the manner of opening and closing the engine valve. When it is determined that the actual opening amount of the wastegate valve is smaller than the regular opening amount, the control means may retard the closing timing of the exhaust valve relative to target closing timing that is calculated based on the engine operating state and may control the exhaust valve timing adjustment mechanism based on the corrected target closing timing, thereby increasing a valve overlap period in which the exhaust valve and the intake valve are both open.

With the configuration described above, the amount of exhaust gas that is returned to the combustion chamber, which is part of the exhaust gas discharged from the combustion chamber into the exhaust passage, that is, the internal EGR amount, is increased by an amount that corresponds to an amount by which a valve overlap period is increased due to retardation of the closing timing of the exhaust valve. Thus, the amount of air that is taken in the combustion chamber via the intake valve in the immediately subsequent combustion stroke is decreased by an amount by which the internal EGR amount is increased. As a result, the combustion pressure is decreased. The amount of exhaust gas that is discharged toward the turbocharger is decreased by an amount of increase in the internal EGR amount. Thus, the pressure of the exhaust gas that is discharged from the combustion chamber is decreased.

In the internal combustion engine that has the above-described configuration, the variable valve mechanism may be an exhaust valve timing adjustment mechanism that adjusts closing timing of an exhaust valve, which is used as the manner of opening and closing the engine valve. When it is determined that the actual opening amount of the wastegate valve is smaller than the regular opening amount, the control means may advance closing timing of the exhaust valve relative to target closing timing that is calculated based on the engine operating state, and may control the exhaust valve timing adjustment mechanism based on the corrected target closing timing.

With the configuration described above, the amount of exhaust gas that is introduced into the intake passage without being discharged from the combustion chamber to the exhaust passage is increased by an amount that corresponds to an amount by which the closing timing of the exhaust valve is advanced relative to the target closing timing, that is, an amount by which the exhaust valve is closed earlier than the target closing timing. Thus, it is possible to decrease the amount of air taken in the combustion chamber via the intake valve in the immediately subsequent combustion stroke by an amount of increase in the exhaust gas. Accordingly, the combustion pressure is decreased. As a result, it is possible to decrease the pressure of the exhaust gas that is discharged from the combustion chamber.

In a preferred embodiment of the internal combustion engine according to the invention, when the determination means determines that the actual opening amount of the wastegate valve is larger than the regular opening amount, the control means may control the variable valve mechanism in such a manner that the pressure of the exhaust gas that is discharged from the combustion chamber is increased.

The pressure of the exhaust gas that is applied to the turbocharger is lower and the charging pressure is lower when the actual opening amount of the wastegate valve is larger than the regular opening amount than when the actual opening amount of the wastegate valve agrees with the regular opening amount. As a result, the power output from the engine excessively decreases.

However, with the configuration described above, when it is determined that the actual opening amount of the wastegate valve is larger than the regular opening amount, the variable valve mechanism is controlled in such a manner that the pressure of the exhaust gas that is discharged from the combustion chamber is increased. Thus, the pressure of the exhaust gas that is applied to the turbocharger is increased, and a decease in the charging pressure is suppressed. Accordingly, when the actual opening amount of the wastegate valve is larger than the regular opening amount, an excessive decrease in the power output from the engine is avoided.

In the above-described configuration, when it is not determined that the actual opening amount of the wastegate valve is larger than the regular opening amount, the control means may control the variable valve mechanism based on a target manner of opening and closing the engine valve, which is calculated based on the engine operating state.. On the other hand, when it is determined that the actual opening amount of the wastegate valve is larger than the regular opening amount, the control means may correct the target manner of opening and closing the engine valve in such a manner that the pressure of the exhaust gas that is discharged from the combustion chamber is increased, and may control the variable valve mechanism based on the corrected target manner of opening and closing the engine valve.

In the internal combustion engine that has the above-described configuration, the variable valve mechanism may be an intake valve timing adjustment mechanism that adjusts closing timing of an intake valve, which is used as the manner of opening and closing the engine valve. When it is determined that the actual opening amount of the wastegate valve is larger than the regular opening amount, the control means may retard the closing timing of the intake valve relative to target closing timing, which is calculated based on the engine operating state, and may control the intake valve timing adjustment mechanism based on the corrected target closing timing.

With the configuration described above, the amount of air that is taken into the combustion chamber via the intake valve is increased by an amount that corresponds to an amount by which the closing timing of the intake valve is retarded relative to the target closing timing, that is, an amount by which the intake valve is closed later than the target closing timing. Thus, the combustion pressure is increased, and the pressure of the exhaust gas that is discharged from the combustion chamber is increased.

The invention also relates to a method for controlling an internal combustion engine that includes a turbocharger which is driven by exhaust gas and which compresses air that is taken into a combustion chamber, a bypass passage through which the exhaust gas bypasses the turbocharger when flowing through an exhaust passage, and a wastegate valve which is provided in the bypass passage and which adjusts the flow passage area of the bypass passage. According to the method, it is determined whether the actual opening amount of the wastegate valve deviates from the regular opening amount which is achieved when the wastegate valve operates properly. When it is determined that the actual opening amount of the wastegate valve deviates from the regular opening amount, the manner of opening and closing an engine valve is adjusted in such a manner that the pressure of the exhaust gas that is discharged from the combustion chamber approaches the pressure of the exhaust gas which is exhibited when the actual opening amount of the wastegate valve agrees with the regular opening amount.

BRIEF DESCRIPTION OF THE DRAWINGS

The foregoing and further features and advantages of the invention will become apparent from the following description of example embodiments with reference to the accompanying drawings, wherein the same or corresponding portions will be denoted by the same reference numerals and wherein:

FIG. 1 is a view schematically showing the structure of an internal combustion engine according to a first embodiment of the invention;

FIG. 2 is a graph for describing the valve timing of an intake valve according to the first embodiment of the invention;

FIG 3 is a graph for describing the valve timing of an exhaust valve according to the first embodiment of the invention;

FIG. 4 is a flowchart showing a routine of valve timing control according to the first embodiment of the invention;

FIG. 5 is a graph for describing the valve timing of the intake valve according to the first embodiment of the invention;

FIG. 6 is a graph for describing the valve timing of the exhaust valve according to the first embodiment of the invention;

FIG 7 is a flowchart showing a routine of valve timing control that is executed over an internal combustion engine according to a second embodiment of the invention; and

FIG. 8 is a graph for describing the valve timing of the intake valve according to the second embodiment of the invention.

DETAILED DESCRIPTION OF THE EXAMPLE EMBODIMENTS

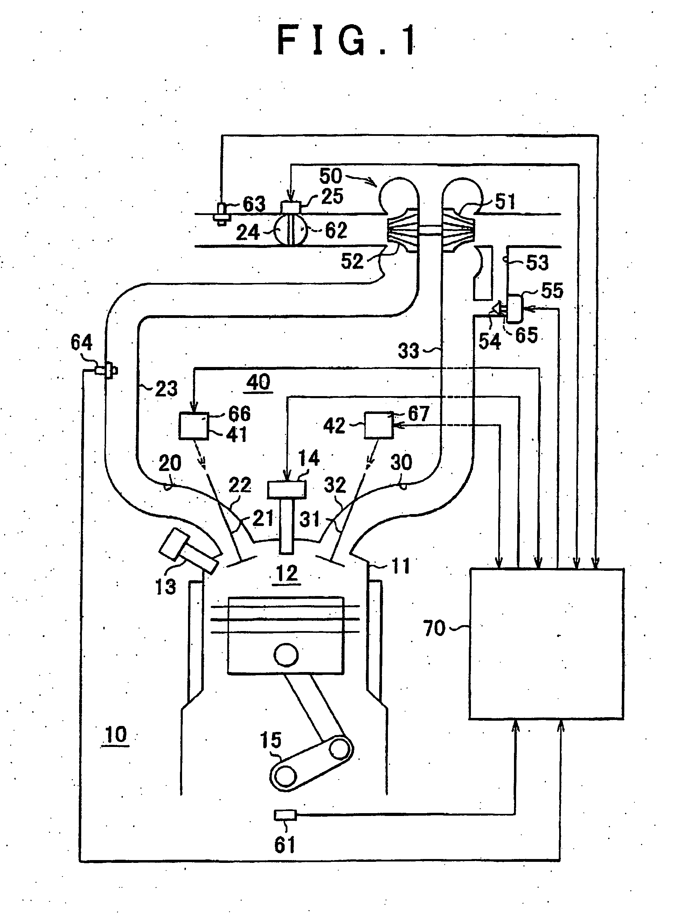

Hereafter, a first embodiment of the invention will be described with reference to FIGs. 1 to 6. In the first embodiment, the invention is applied to an in-vehicle cylinder-injection gasoline engine (hereinafter, referred to as "engine 10").

FIG 1 schematically shows the structure of the engine 10. A cylinder 11 of the engine 10 is provided with an injector 13 that injects fuel directly into a combustion chamber 12 and a spark plug 14 that ignites an air-fuel mixture formed of air and the fuel injected from the injector 13. An intake passage 20 and an exhaust passage 30 are connected to the combustion chamber 12 of the engine 10. The cylinder 11 of the engine 10 is provided with an intake valve 21 that changes the state of communication between the combustion chamber 12 and the intake passage 20 and an exhaust valve 31 that changes the state of communication between the combustion chamber 12 and the exhaust passage 30.

The intake passage 20 is defined by an intake port 22 that is connected to the combustion chamber 12 and an intake pipe 23 that is connected to an upstream-side portion of the intake port 22. A throttle valve 24 that adjusts the flow passage area of the intake pipe 23 and a throttle motor 25 that opens and closes the throttle valve 24 are provided in the intake pipe 23. The flow rate of the intake air that is supplied to the combustion chamber 12 through the intake passage 20 is controlled based on the opening amount of the throttle valve 24.

The exhaust passage 30 is defined by an exhaust port 32 that is connected to the combustion chamber 12 and an exhaust pipe 33 that is connected to a downstream-side portion of the exhaust port 32. The engine 10 is provided with a variable valve mechanism 40 that adjusts the manner of opening and closing the engine valves (the intake valve 21 and the exhaust valve 31). The variable valve mechanism 40 includes an intake valve timing adjustment mechanism 41 that adjusts the valve timing of the intake valve 21 and an exhaust valve timing adjustment mechanism 42 that adjusts the valve timing of the exhaust valve 31.

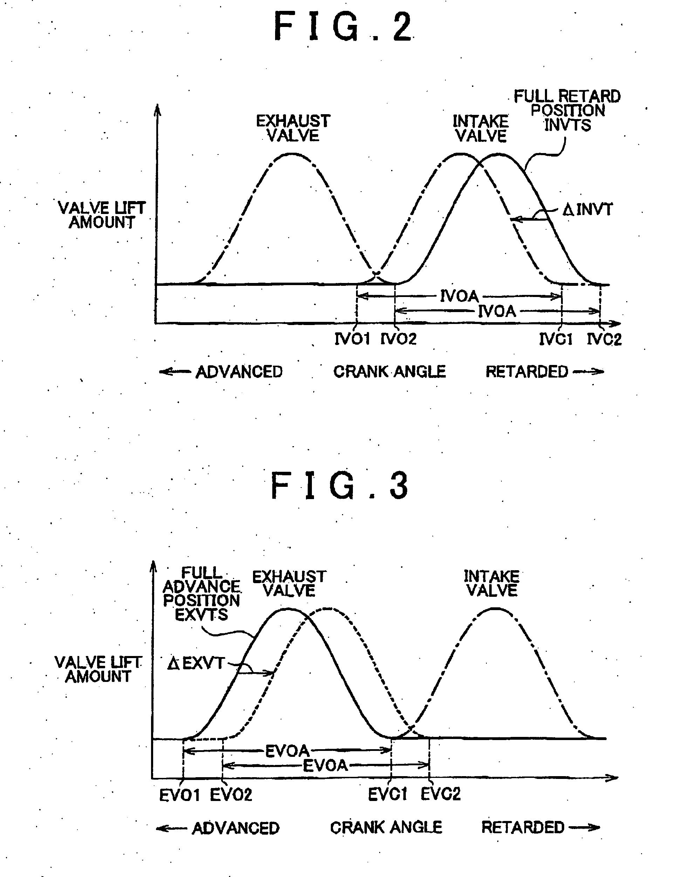

The intake valve timing adjustment mechanism 41 adjusts the rotational phase of a camshaft, which drives the intake valve 21, relative to a crankshaft 15 of the engine 10. The valve timing (intake valve timing INVT) of the intake valve 21 is continuously adjusted by the intake valve timing adjustment mechanism 41. Opening timing IVO and closing timing IVC of the intake valve 21 are advanced or retarded by the same crank angle when the valve timing is adjusted. As shown in FIG 2, the opening timing IVO and the closing timing IVC of the intake valve 21 are advanced or retarded while a valve opening period IVOA of the intake valve 21 remains constant. In the first embodiment of the invention, a full retard position INVTS, at which the opening timing IVO and the closing timing IVC are the most retarded, is used as the reference. The intake valve timing INVT is expressed as an angle of advance ΔINVT (hereinafter, referred to as "advance angle ΔINVT") from the full retard position INVTS.

The exhaust valve timing adjustment mechanism 42 adjusts the rotational phase of a camshaft, which drives the exhaust valve 31, relative to the crankshaft 15 of the engine 10. The valve timing (exhaust valve timing EXVT) of the exhaust valve 31 is continuously adjusted by the exhaust valve timing adjustment mechanism 42. Opening timing EVO and closing timing EVC of the exhaust valve 31 are advanced or retarded by the same crank angle when the valve timing is adjusted. As shown in FIG. 3, the opening timing EVO and the closing timing EVC of the exhaust valve 31 are advanced or retarded while a valve opening period EVOA of the exhaust valve 31 remains constant. In the first embodiment of the invention, a full advance position EXVTS, at which the opening timing EVO and the closing timing EVC are the most advanced, is used as the reference. The exhaust valve timing EXVT is expressed as an angle of retardation ΔEXVT (hereinafter, referred to as "retardation angle ΔEXVT") from the full advance position EXVTS.

The engine 10 is provided with a turbocharger 50 that is driven by the pressure of the exhaust gas discharged from the combustion chamber 12. The turbocharger 50 includes a turbine wheel 51 that is arranged in the exhaust pipe 33 and a compressor wheel 52 that is connected to the turbine wheel 51 via a shaft. When the turbine wheel 51 is rotated by the pressure of the exhaust gas, the compressor wheel 52 that is connected to the turbine wheel 51 via the shaft is rotated together with the turbine wheel 51. In this way, the air that is taken into the combustion chamber 12 is compressed.

A bypass passage 53 is connected to the exhaust passage 30 so that the exhaust gas is able to bypass the turbocharger 50. In the bypass passage 53, there are provided a wastegate valve 54 that adjusts the flow passage area of the bypass passage 53 and an actuator 55 that opens and closes the wastegate valve 54. The flow rate of the exhaust gas that flows through the bypass passage 53 is adjusted by controlling the opening amount of the wastegate valve 54. In this way, the flow rate of the exhaust gas that flows toward the turbine wheel 51 is adjusted. As a result, the rotational speed of the turbocharger 50 is adjusted. A charging pressure PM that is achieved by the turbocharger 50 of the engine 10 is adjusted by adjusting the rotational speed of the turbocharger 50 in the above-described manner.

The engine 10 is provided with various sensors that detect the operating state of the engine 10. A rotational speed sensor 61 that detects the rotational speed of the crankshaft 15 (hereinafter, referred to as "engine speed NE") is provided near the crankshaft 15. A throttle sensor 62 that detects the opening amount of the throttle valve 24 (hereinafter, referred to as "throttle valve opening amount TA") is provided near the throttle valve 24. An airflow meter 63 that detects the flow rate of the intake air that flows through the intake passage 20 (hereinafter, referred to as "intake air flow rate GA") is provided upstream of the throttle valve 24. A charging pressure sensor 64 that detects the pressure of the intake air (hereinafter, referred to as "charging pressure PM) is provided downstream of the compressor wheel 52. A wastegate sensor 65 that detects the opening amount of the wastegate valve 54 (hereinafter, referred to as "wastegate opening amount WA") is provided near the wastegate valve 54. An intake valve timing sensor 66 that detects the intake valve timing INVT is provided near the intake valve timing adjustment mechanism 41. An exhaust valve timing sensor 67 that detects the exhaust valve timing EXVT is provided near the exhaust valve timing adjustment mechanism 42. Signals indicating detection results from these sensors 61 to 67 are input in an electronic control unit 70 that executes various controls over the engine 10.

The electronic control unit 70 includes a memory that stores programs and calculation maps which are used to execute various controls and various data that are calculated when the controls are executed. The electronic control unit 70 executes, for example, the following controls based on the operating state of the engine 10, which is determined based on the values output from various sensors, for example, the sensors 61 to 67. That is, the electronic control unit 70 calculates the target fuel injection amount and the target fuel injection timing based on the engine operating state, and executes the fuel injection control for controlling the injector 13 based on the target fuel injection amount and the target fuel injection timing. The electronic control unit 70 calculates the target ignition timing based on the engine operating state, and executes the ignition timing control for controlling the spark plug 14 based on the target ignition timing. The electronic control unit 70 calculates the target throttle valve opening amount based on the engine operating state, and executes the throttle valve control for controlling the throttle motor 25 based on the target throttle valve opening amount. The electronic control unit 70 calculates a base advance angle $\Delta$INVTb for the intake valve timing INVT based on the engine operating state, and executes the intake valve timing control for controlling the intake valve timing adjustment mechanism 41 based on the base advance angle $\Delta$INVTb. The electronic control unit 70 calculates a base retardation angle $\Delta$EXVTb for the exhaust valve 31 based on the engine operating state, and executes the exhaust valve timing control for controlling the exhaust valve timing adjustment mechanism 42 based on the base retardation angle $\Delta$EXVTb. The electronic control unit 70 calculates the target opening amount for the wastegate valve 54 based on the engine operating state, and executes the wastegate valve control for controlling the wastegate valve 54 based on the target opening amount.

In the engine 10, the wastegate valve 54 is sometimes kept closed and unable to open. If the wastegate valve 54 is unable to open, the exhaust gas that is supposed to pass through the wastegate valve 54 flows toward the turbine wheel 51 of the turbocharger 50. Therefore, the pressure of the exhaust gas that is applied to the turbine wheel 51 increases, which increases the charging pressure PM. As a result, the power output from the engine excessively increases.

Therefore, in the first embodiment of the invention, the electronic control unit 70 determines whether the wastegate valve 54 is unable to open based on the actual opening amount WA of the wastegate valve 54, which is detected by the wastegate sensor 65. In the first embodiment of the invention, it is determined that the wastegate valve 54 is unable to open, if the actual opening amount WA of the wastegate valve 54 is continuously kept smaller than a target opening amount WAT for a predetermined time period. Therefore, the state in which the wastegate valve 54 is unable to open includes the state in which the wastegate valve 54 is fully closed and the state in which the actual opening amount WA of the wastegate valve 54 is continuously kept smaller than the target opening amount WAT. If it is determined that the wastegate valve 54 is unable to open, the valve timing control described below is executed over the variable valve mechanism 40 in such a manner that the pressure of the exhaust gas that is discharged from the combustion chamber 12 is decreased.

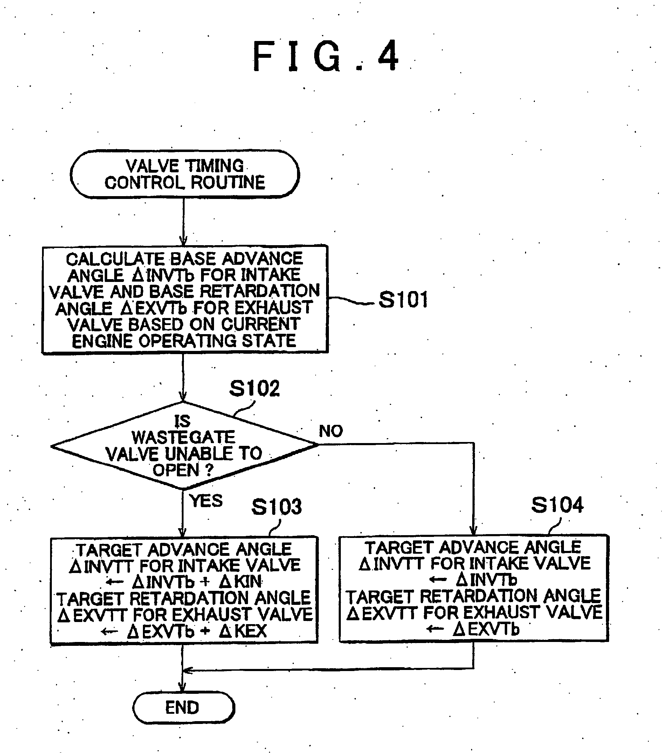

Next, the valve timing control will be described with reference to FIG 4. FIG. 4 is a flowchart showing a routine of the valve timing control. The routine shown in the flowchart is periodically executed by the electronic control unit 70 during operation of the engine 10.

In this routine, the electronic control unit 70 obtains the current engine operating state, and calculates the base advance angle $\Delta$INVTb for the intake valve 21 and the base retardation angle $\Delta$EXVT for the exhaust valve 31 based on the engine operating state (S101). In this routine, the engine speed NE and an engine load KL are used as the engine operating state. As the engine load KL, a ratio (GA/GAmax) of the current intake air flow rate GA to a maximum intake air flow rate GAmax, which is the maximum value of the intake air flow rate GA that is achievable at the current engine speed NE, is used.

Next, the electronic control unit 70 determines whether the wastegate valve 54 is unable to open (S102). If it is determined that the wastegate valve 54 is unable to open ("YES" in S102), the electronic control unit 70 calculates a target advance angle $\Delta$INVTT for the intake valve 21 according to Equation 1 indicated below, and a target retardation angle $\Delta$EXVTT for the exhaust valve 31 according to Equation 2 indicated below (S103), after which the routine ends.

$$\Delta INVTT \leftarrow \Delta INVTb + \Delta KIN \qquad \text{Equation 1}$$

$$\Delta EXVTT \leftarrow \Delta EXVTb + \Delta KEX \qquad \text{Equation 2}$$

Here, an advance angle correction amount $\Delta KIN$ and a retardation angle correction amount $\Delta KEX$ are prescribed fixed values. Alternatively, these correction amounts $AKIN$ and $\Delta KEX$ may be variably set based on the current charging pressure PM. The correction amounts $\Delta KIN$ and $\Delta KEX$ may be set to larger values so that the pressure of the exhaust gas that is discharged from the combustion chamber 12 is decreased by a larger amount when the charging pressure PM is high than when the charging pressure PM is low.

On the other hand, it is determined that the wastegate valve 54 is able to open ("NO" in S102), the electronic control unit 70 sets the target advance angle $\Delta INVTT$ for the intake valve 21 to the base advance angle $\Delta INVTb$ according to Equation 3 indicated below (S104). In addition, the electronic control unit 70 sets the target retardation angle $\Delta EXVTT$ for the exhaust valve 31 to the base retardation angle $\Delta EXVTb$ according to Equation 4 indicated below (S104), after which the routine ends.

$$\Delta INVTT \leftarrow \Delta INVTb \qquad \text{Equation 3}$$

$$\Delta EXVTT \leftarrow \Delta EXVTb \qquad \text{Equation 4}$$

The intake valve timing adjustment mechanism 41 and the exhaust valve timing adjustment mechanism 42 are controlled based on the thus calculated target advance angle $\Delta INVTT$ and the target retardation angle $\Delta EXVTT$, respectively.

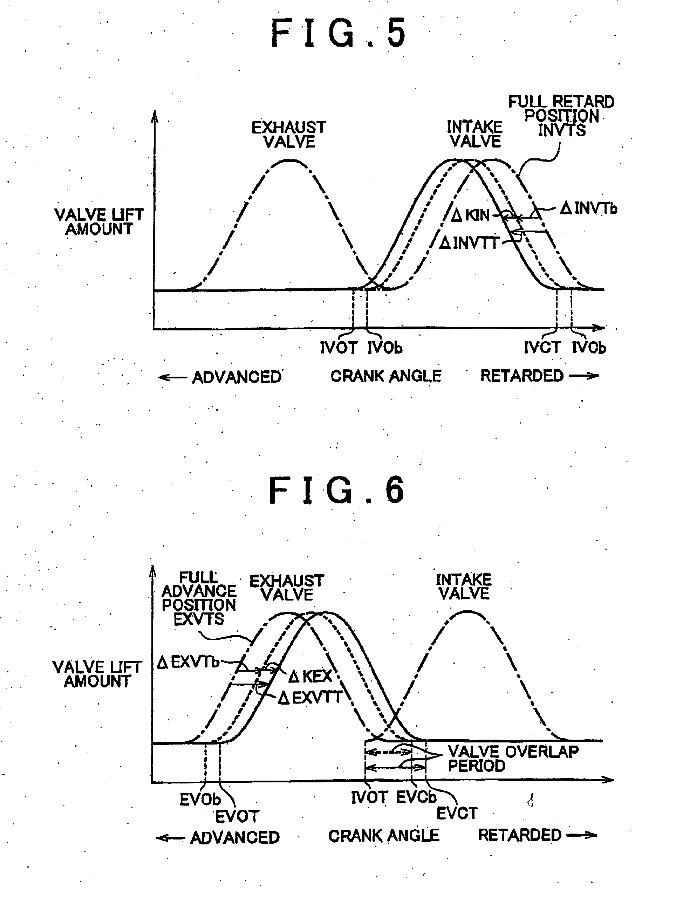

Next, with reference to FIG. 5, description will be provided concerning the effect that is obtained by advancing the valve timing of the intake valve 21 when it is determined that the wastegate valve 54 is unable to open.

Closing timing IVCT (indicated by a solid line) that corresponds to the target advance angle $\Delta INVTT$ (=$\Delta INVTb$ + $\Delta KIN$) for the intake valve 21 is advanced relative to closing timing IVCb (indicated by a dashed line) that corresponds to the base advance angle $\Delta INVTb$ that is calculated based on the engine operating state. Therefore, the amount of air that is taken in the combustion chamber 12 via the intake valve 21 is decreased by an amount that corresponds to an amount by which the closing timing IVCT for the intake valve 21 is advanced relative to the closing timing IVCb. As a result, the combustion pressure decreases, and the pressure of the exhaust gas that is discharged from the combustion chamber 12 is decreased.

Next, with reference to FIG 6, description will be provided concerning the effect that is obtained by retarding the valve timing of the exhaust valve 31 when it is determined that the wastegate valve 54 is unable to open.

Closing timing EVCT (indicated by a solid line) that corresponds to the target retardation angle $\Delta EXVTT$ (= $\Delta EXVTb$ + $\Delta KEX$) for the exhaust valve 31 is retarded relative to closing timing EVCb that corresponds to the base retardation angle $\Delta EXVTb$ that is calculated based on the engine operating state. Therefore, the amount of exhaust gas that is returned to the combustion chamber 12, which is part of the exhaust gas discharged from the combustion chamber 12 into the exhaust passage 30, that is, the internal EGR amount, is increased by an amount that corresponds to an amount by which a valve overlap period, in which the exhaust valve 31 and the intake valve 21 are both open, is increased. Thus, the amount of air that is taken in the combustion chamber 12 via the intake valve 21 in the immediately subsequent combustion stroke is decreased by an amount by which the internal EGR amount is increased. As a result, the combustion pressure is decreased. The amount of exhaust gas that is discharged toward the turbocharger 50 is decreased by an amount of increase in the internal EGR amount. Thus, the combustion pressure is decreased, and the pressure of the exhaust gas that is discharged from the combustion chamber 12 is decreased.

Opening timing EVOT (indicated by a solid line) that corresponds to the target retardation angle $\Delta EXVTT$ for the exhaust valve 31 is retarded relative to the opening timing EVOb that corresponds to the base retardation angle $\Delta EXVTb$ that is calculated based on the engine operating state. Therefore, the pressure in the combustion chamber 12, which is exhibited when discharge of the exhaust gas from the combustion chamber 12 to the exhaust passage 30 is started, is decreased by an amount that corresponds to an amount by which the opening timing EVOT for the exhaust valve 31 is retarded relative to the opening timing EVOb. Thus, the combustion pressure is decreased, and the pressure of the exhaust gas that is discharged from the combustion chamber 12 is decreased.

With the internal combustion engine according to the first embodiment of the invention described above, the following effects are obtained. 1) If it is determined that the wastegate valve 54 is unable to open, the variable valve mechanism 40 is controlled in such a manner that the pressure of the exhaust gas that is discharged from the combustion chamber 12 is decreased. Thus, the pressure of the exhaust gas that is applied to the turbine wheel 51 of the turbocharger 50 is decreased, and an increase in the charging pressure PM is suppressed. Therefore, it is possible to avoid an excessive increase in the power that is output from the engine when the wastegate valve 54 is unable to open.

2) If it is determined that the wastegate valve 54 is unable to open, the target advance angle $\Delta$INVTT ( = $\Delta$INVTb + $\Delta$KIN) is set to the sum of the base advance angle $\Delta$INVTb for the intake valve 21, which is calculated based on the engine operating state, and the advance angle correction amount AKIN. Then, the intake valve timing adjustment mechanism 41 is controlled based on the target advance angle $\Delta$INVTT. Thus, the combustion pressure is decreased, and the pressure of the exhaust gas that is discharged from the combustion chamber is decreased.

3) If it is determined that the wastegate valve 54 is unable to open, the target retardation angle $\Delta$EXVTT (= $\Delta$EXVTb + $\Delta$KEX) is set to the sum of the base retardation angle $\Delta$EXVTb for the exhaust valve 31, which is calculated based on the engine operating state, and the retardation angle correction amount $\Delta$KEX, so that the valve overlap period in which the exhaust valve 31 and the intake valve 21 are both open is increased. Then, the exhaust valve timing adjustment mechanism 42 is controlled based on the target retardation angle $\Delta$EXVTT. Accordingly, the pressure of the exhaust gas that is discharged from the combustion chamber 12 is decreased.

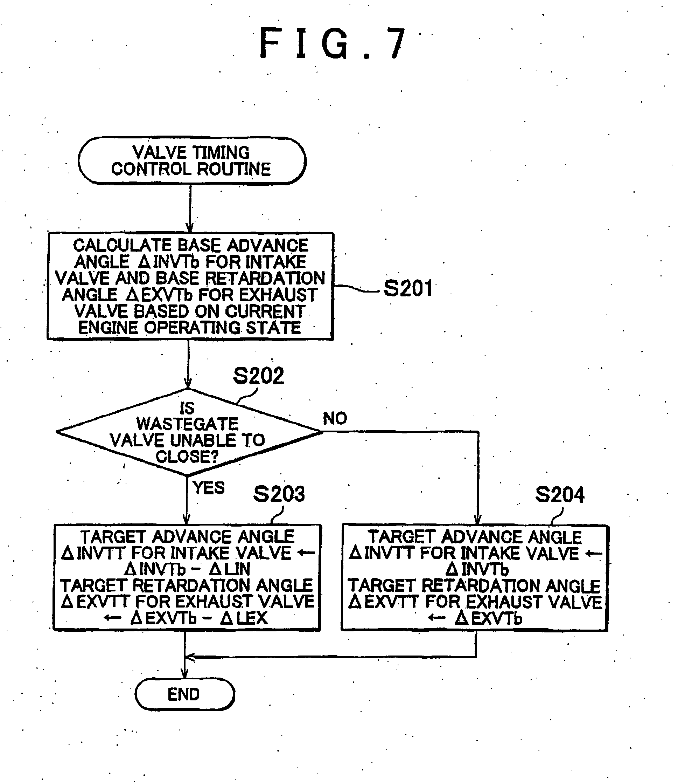

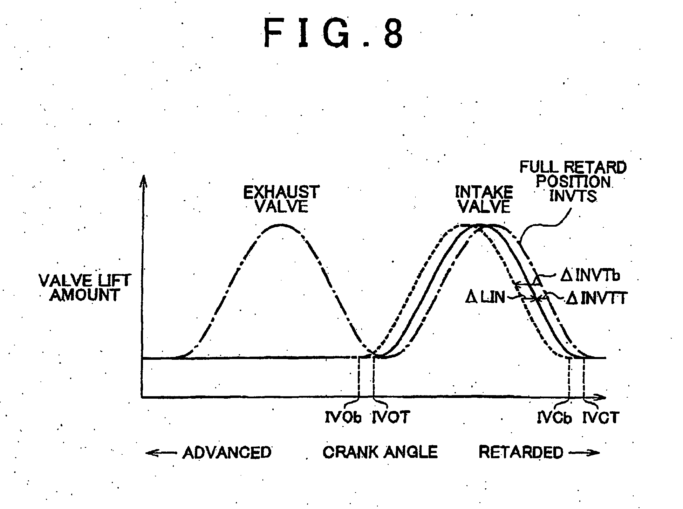

Hereafter, an internal combustion engine according to a second embodiment of the invention will be described with reference to FIGs. 7 and 8. Because the structure of the engine 10 is the same as that in the first embodiment of the invention, the description thereof will not be provided below.

If the wastegate valve 54 is kept open and unable to close, the pressure of the exhaust gas that is applied to the turbocharger 50 increases, and the charging pressure PM decreases with an increase in the pressure of the exhaust gas. As a result, the power output from the engine excessively decreases.

Therefore, according to the second embodiment of the invention, the electronic control unit 70 determines whether the wastegate valve 54 is unable to close based on the actual opening amount WA of the wastegate valve 54 that is detected by the wastegate sensor 65. In the second embodiment of the invention, it is determined that the wastegate valve 54 is unable to close, if the actual opening amount WA of the wastegate valve 54 is continuously kept larger than the target opening amount WAT for a predetermined time period. Therefore, the state in which the wastegate valve 54 is unable to close includes the state in which the wastegate valve 54 is fully open and the state in which the actual opening amount WA of the wastegate valve 54 is continuously kept larger than the target opening amount WAT. If it is determined that the wastegate valve 54 is unable to close, the valve timing control described below is executed over the variable valve mechanism 40 in such a manner that the pressure of the exhaust gas that is discharged from the combustion chamber 12 is increased.

Next, the valve timing control will be described with reference to FIG 7. FIG. 7 is a flowchart showing a routine of the valve timing control. The routine in the flowchart is periodically executed by the electronic control unit 70 during operation of the engine 10.

In this routine as well, the electronic control unit 70 obtains the engine operating state, and calculates the base advance angle $\Delta$INVTb for the intake valve 21 and the base retardation angle AEXVT for the exhaust valve 31 based on the engine operating state (S201).

Next, the electronic control unit 70 determines whether the wastegate valve 54 is unable to close (S202). If it determined that the wastegate valve 54 is unable to close ("YES" in S202), the electronic control unit 70 calculates the target advance angle $\Delta$INVTT for the intake valve 21 according to Equation 5 indicated below. In addition, the electronic control unit 70 sets the target retardation angle $\Delta$EXVTT for the exhaust valve 31 to the base retardation angle $\Delta$EXVTb according to Equation 6 indicated below (S203), after which the routine ends.

$$\Delta INVTT \leftarrow \Delta INVTb - \Delta LIN \qquad \text{Equation 5}$$

$$\Delta EXVTT \leftarrow \Delta EXVTb \qquad \text{Equation 6}$$

Here, the retardation angle correction amount $\Delta$LIN is a prescribed fixed value. Alternatively, the retardation angle correction amount $\Delta$LIN may be variably set based on, for example, the current charging pressure PM. That is, the retardation angle correction amount $\Delta$LIN may be set to a larger value so that the pressure of the exhaust gas that is discharged from the combustion chamber 12 is increased by a larger amount when the charging pressure PM is low than when the charging pressure PM is high.

On the other hand, if it is determined that the wastegate valve is able to close ("NO" in S202), the electronic control unit 70 sets the target advance angle $\Delta$INVTT for the intake valve 21 to the base advance angle $\Delta$INVTb according to Equation 3 indicated below. In addition, the electronic control unit 70 sets the target retardation angle $\Delta$EXCTT for the exhaust valve 31 to the base retardation angle $\Delta$EXVTb (S204), after which the routine ends.

The intake valve timing adjustment mechanism 41 and the exhaust valve timing adjustment mechanism 42 are controlled based on the thus calculated target advance angle ΔINVTT and the target retardation angle ΔEXVTT, respectively.

Next, with reference to FIG. 8, description will be provided concerning the effect that is obtained by retarding the valve timing of the intake valve 21 when it is determined that the wastegate valve 54 is unable to close.

The closing timing IVCT (indicated by a solid line) that corresponds to the target advance angle ΔINVTT (= ΔINVTb - ΔLIN) for the intake valve 21 is retarded relative to the closing timing IVCb (indicated by a dashed line) that corresponds to the base advance angle ΔINVTb that is calculated based on the engine operating state. Therefore, the amount of air that is taken in the combustion chamber 12 via the intake valve 21 is increased by an amount that corresponds to an amount by which the closing timing IVCT for the intake valve 21 is retarded relative to the closing timing IVCb. Thus, the combustion pressure increases, and the pressure of the exhaust gas that is discharged from the combustion chamber 12 increases.

With the internal combustion engine according to the second embodiment of the invention, the following effects are obtained. 1) If it is determined that the wastegate valve 54 is unable to close, the variable valve mechanism 40 is controlled in such a manner that the pressure of the exhaust gas that is discharged from the combustion chamber 12 is increased. Thus, the pressure of the exhaust gas that is applied to the turbine wheel 51 of the turbocharger 50 is increased, and a decrease in the charging pressure is suppressed. Accordingly, it is possible to avoid an excessive decrease in the power output from the engine when the wastegate valve 54 is unable to close.

2) If it is determined that the wastegate valve 54 is unable to close, the target advance angle ΔINVTT (= ΔINVTb - ΔLIN) is set to a value obtained by subtracting the retardation angle correction amount ΔLIN from the base advance angle ΔINVTb for the intake valve 21 that is calculated based on the engine operating state. Then, the intake valve timing adjustment mechanism 41 is controlled based on the target advance angle ΔINVTT. Thus, the combustion pressure is increased, and the pressure of the exhaust gas that is discharged from the combustion chamber is increased.

The configuration for the internal combustion engine according to the invention is not limited to the configurations in the embodiments described above. For example, the following configurations may be employed. In the first embodiment of the invention, it is determined whether the wastegate valve 54 is unable to open. Alternatively, a determination as to whether the actual opening amount WA of the wastegate valve 54 is smaller than the regular opening amount, which is achieved when the wastegate valve 54 operates properly, although the wastegate valve 54 operates may be made in the above-described manner. In this case as well, execution of the valve timing control according to the first embodiment of the invention is effective.

In the second embodiment of the invention, it is determined whether the wastegate valve 54 is unable to close. Alternatively, a determination as to whether the actual opening amount WA of the wastegate valve 54 is larger than the regular opening amount, which is achieved when the wastegate valve 54 operates properly, although the wastegate valve 54 operates may be made in the above-described manner. In this case as well, execution of the valve timing control according to the second embodiment of the invention is effective.

In the embodiments of the invention described above, it is determined whether the actual opening amount WA of the wastegate valve 54 deviates from the regular opening amount, which is achieved when the wastegate valve 54 operates properly, by comparing the actual opening amount WA of the wastegate valve 54 with the target opening amount WAT. However, the method for determining whether the wastegate valve 54 malfunctions is not limited to the method described above. For example, whether the wastegate valve 54 malfunctions may be determined based on the charging pressure PM. In this case, it may be determined that the actual opening amount WA of the wastegate valve 54 is smaller than the regular opening amount, which is achieved when the wastegate valve 54 operates properly, when the charging pressure PM is continuously kept higher than a target charging pressure for a predetermined time period. It may be determined that the actual opening amount WA of the wastegate valve 54 is larger than the regular opening amount, which is achieved when the wastegate valve 54 operates properly, when the charging pressure PM is continuously kept lower than the target charging pressure for the predetermined time period.

In the first embodiment of the invention, if it is determined that the wastegate valve 54 is unable to open, the valve timing of the intake valve 21 is advanced and the valve timing of the exhaust valve 31 is retarded. Alternatively, only a correction for advancing the valve timing of the intake valve 21 may be made. Further alternatively, only a correction for retarding the valve timing of the exhaust valve 31 may be made.

In the first embodiment of the invention, if it is determined that the wastegate valve 54 is unable to open, the closing timing of the exhaust valve 31 is retarded. Alternatively, a correction for advancing the closing timing of the exhaust valve 31 may be made. In this case, the amount of exhaust gas that is introduced into the intake passage 20 without being discharged from the combustion chamber 12 to the exhaust passage 30 is increased by an amount that corresponds to an amount by which the closing timing of the exhaust valve 31 is advanced, that is, an amount by which the exhaust valve 31 is closed earlier. Thus, it is possible to decrease the amount of air taken in the combustion chamber 12 via the intake valve 21 in the immediately subsequent combustion stroke by an amount of increase in the exhaust gas. Accordingly, the combustion pressure is decreased. As a result, it is possible to decrease the pressure of the exhaust gas that is discharged from the combustion chamber 12.

In the embodiments of the invention described above, if it is determined that the actual opening amount WA of the wastegate valve 54 deviates from the regular opening amount, which is achieved when the wastegate valve 54 operates properly, corrections are made to the base advance angle ΔINVTb for the intake valve 21 and the base retardation angle ΔEXVTb for the exhaust valve 31, which are calculated based on the engine operating state on an as-required basis. Then, the variable valve mechanism 40 is controlled based on the target advance angle ΔINVTT for the intake valve 21 and the target retardation angle ΔEXVTT for the exhaust valve 31 which are calculated through the corrections. However, another control may be executed instead of the corrections described above. For example, if it is determined that the actual opening amount WA of the wastegate valve 54 deviates from the regular opening amount, which is achieved when the wastegate valve 54 operates properly, a target control amount for the variable valve mechanism 40 may be set with the use of a map that differs from a map which is used when such malfunction has not occurred.

In the embodiments of the invention described above, the cylinder-injection engine 10 is used. However, an internal combustion engine to which the invention is applied is not limited to this. The invention may be applied to, for example, a port-injection engine. The invention may be applied not only to a gasoline engine but also to a diesel engine.

In the embodiments of the invention described above, the variable valve mechanism 40 that adjusts the valve timing of the engine valve is used. However, a variable valve mechanism to which the invention is applied is not limited to this. For example, a mechanism that is able to adjusts the valve lift amount may be used.

The invention may be implemented in various other embodiments. According to the invention, if it is determined that the actual opening amount WA of the wastegate valve 54 deviates from the regular opening amount, which is achieved when the wastegate valve 54 operates properly, the variable valve mechanism is controlled in such a manner that the pressure of the exhaust gas that is discharged from the combustion chamber 12 approaches the pressure of the exhaust gas, which is exhibited when such malfunction has not occurred.

While the invention has been described with reference to the example embodiments thereof, it is to be understood that the invention is not limited to the example embodiments or constructions. To the contrary, the invention is intended to cover various modifications and equivalent arrangements. In addition, while the various elements of the example embodiments are shown in various combinations and configurations, which are exemplary, other combinations and configurations within the scope of claim 1 are also possible.

**Claims**

1.  An internal combustion engine (10) that includes a turbocharger (50) which is driven by exhaust gas and which compresses air that is taken into a combustion chamber (12), a bypass passage (53) through which the exhaust gas bypasses the turbocharger (50) when flowing through an exhaust passage, a wastegate valve (54) which is provided in the bypass passage and which adjusts a flow passage area of the bypass passage, and determination means (65,70) for determining whether an actual opening amount of the wastegate valve (54) deviates from a regular opening amount which is achieved when the wastegate valve operates properly **characterized by** comprising:

    a variable valve mechanism (40) that adjusts a manner of opening and closing an engine valve (21,31), and control means for controlling the variable valve mechanism (40), wherein when the determination means determines that the actual opening amount of the wastegate valve (54) deviates from the regular opening amount, the control means controls the variable valve mechanism (40) in such a manner that a pressure of the exhaust gas that is discharged from the combustion chamber (12) approaches a pressure of the exhaust gas which is exhibited when the actual opening amount of the wastegate valve (54) agrees with the regular opening amount.

2.  The internal combustion engine according to claim 1, wherein when the determination means determines that the actual opening amount of the wastegate valve is smaller than the regular opening amount, the control means controls the variable valve mechanism in such a manner that the pressure of the exhaust gas that is discharged from the combustion chamber is decreased.

3.  The internal combustion engine according to claim 2, wherein:

    when it is not determined that the actual opening amount of the wastegate valve is smaller than the regular opening amount, the control means controls the variable valve mechanism based on a target manner of opening and closing the engine valve, which is calculated based on an engine operating state; and
    when it is determined that the actual opening amount of the wastegate valve is smaller than the regular opening amount, the control means corrects the target manner of opening and closing the engine valve in such a manner that the pressure of the exhaust gas that is discharged from the combustion chamber is decreased, and controls the variable valve mechanism based on the corrected target manner of opening and closing the engine valve.

4. The internal combustion engine according to claim 3, wherein:

the variable valve mechanism is an intake valve timing adjustment mechanism that adjusts closing timing of an intake valve, which is used as the manner of opening and closing the engine valve; and
when it is determined that the actual opening amount of the wastegate valve is smaller than the regular opening amount, the control means advances the closing timing of the intake valve relative to target closing timing that is calculated based on the engine operating state, and controls the intake valve timing adjustment mechanism based on the corrected target closing timing.

5. The internal combustion engine according to claim 3 or 4, wherein:

the variable valve mechanism is an exhaust valve timing adjustment mechanism that adjusts closing timing of an exhaust valve, which is used as the manner of opening and closing the engine valve; and
when it is determined that the actual opening amount of the wastegate valve is smaller than the regular opening amount, the control means retards the closing timing of the exhaust valve relative to target closing timing that is calculated based on the engine operating state and controls the exhaust valve timing adjustment mechanism based on the corrected target closing timing, thereby increasing a valve overlap period in which the exhaust valve and the intake valve are both open.

6. The internal combustion engine according to claim 3 or 4, wherein:

the variable valve mechanism is an exhaust valve timing adjustment mechanism that adjusts closing timing of an exhaust valve, which is used as the manner of opening and closing the engine valve; and
when it is determined that the actual opening amount of the wastegate valve is smaller than the regular opening amount, the control means advances closing timing of the exhaust valve relative to target closing timing that is calculated based on the engine operating state, and controls the exhaust valve timing adjustment mechanism based on the corrected target closing timing.

7. The internal combustion engine according to claim 1, wherein when the determination means determines that the actual opening amount of the wastegate valve is larger than the regular opening amount, the control means controls the variable valve mechanism in such a manner that the pressure of the exhaust gas that is discharged from the combustion chamber is increased.

8. The internal combustion engine according to claim 7, wherein:

when it is not determined that the actual opening amount of the wastegate valve is larger than the regular opening amount, the control means controls the variable valve mechanism based on a target manner of opening and closing the engine valve, which is calculated based on the engine operating state; and
when it is determined that the actual opening amount of the wastegate valve is larger than the regular opening amount, the control means corrects the target manner of opening and closing the engine valve in such a manner that the pressure of the exhaust gas that is discharged from the combustion chamber is increased, and controls the variable valve mechanism based on the corrected target manner of opening and closing the engine valve.

9. The internal combustion engine according to claim 8, wherein:

the variable valve mechanism is an intake valve timing adjustment mechanism that adjusts closing timing of an intake valve, which is used as the manner of opening and closing the engine valve; and
when it is determined that the actual opening amount of the wastegate valve is larger than the regular opening amount, the control means retards the closing timing of the intake valve relative to target closing timing, which is calculated based on the engine operating state, and controls the intake valve timing adjustment mechanism based on the corrected target closing timing.

10. A method for controlling an internal combustion engine that includes a turbocharger which is driven by exhaust gas and which compresses air that is taken into a combustion chamber, a bypass passage through which the exhaust gas bypasses the turbocharger when flowing through an exhaust passage, and a wastegate valve which is provided in the bypass passage and which adjusts a flow passage area of the bypass passage, **characterized by** comprising:

determining whether an actual opening amount of the wastegate valve deviates from a regular opening amount which is achieved when the wastegate valve operates properly; and

adjusting, when it is determined that the actual opening amount of the wastegate valve deviates from the regular opening amount, a manner of opening and closing an engine valve in such a manner that a pressure of the exhaust gas that is discharged from the combustion chamber approaches a pressure of the exhaust gas which is exhibited when the actual opening amount of the wastegate valve agrees with the regular opening amount.

11. The method according to claim 10, wherein when it is determined that the actual opening amount of the wastegate valve is smaller than the regular opening amount, the manner of opening and closing the engine valve is adjusted in such a manner that the pressure of the exhaust gas that is discharged from the combustion chamber is decreased.

12. The method according to claim 11, wherein:

when it is not determined that the actual opening amount of the wastegate valve is smaller than the regular opening amount, the manner of opening and closing the engine valve is adjusted based on a target manner of opening and closing the engine valve, which is calculated based on an engine operating state; and

when it is determined that the actual opening amount of the wastegate valve is smaller than the regular opening amount, the target manner of opening and closing the engine valve is corrected in such a manner that the pressure of the exhaust gas that is discharged from the combustion chamber is decreased, and the manner of opening and closing the engine valve is adjusted based on the corrected target manner of opening and closing the engine valve.

13. The method according to claim 10, wherein when it is determined that the actual opening amount of the wastegate valve is larger than the regular opening amount, the manner of opening and closing the engine valve is adjusted in such a manner that the pressure of the exhaust gas that is discharged from the combustion chamber is increased.

14. The method according to claim 13, wherein:

when it is not determined that the actual opening amount of the wastegate valve is larger than the regular opening amount, the manner of opening and closing the engine valve is adjusted based on a target manner of opening and closing the engine valve, which is calculated based on the engine operating state; and

when it is determined that the actual opening amount of the wastegate valve is larger than the regular opening amount, the target manner of opening and closing the engine valve is corrected in such a manner that the pressure of the exhaust gas that is discharged from the combustion chamber is increased, and the manner of opening and closing the engine valve is adjusted based on the corrected target manner of opening and closing the engine valve.

**Patentansprüche**

1. Verbrennungskraftmaschine (10), umfassend einen Turbolader (50), der von Abgas getrieben wird und die in eine Verbrennungskammer (12) eingesaugte Luft komprimiert, einen Umgehungskanal (53), durch den hindurch das Abgas beim Durchströmen eines Absaugkanals den Turbolader (50) umgeht, ein Ladedruckregelventil (54), das in dem Umgehungskanal vorgesehen ist und eine Strömungsdurchlaßfläche des Umgehungskanals einstellt, und ein Bestimmungsmittel (65, 70) zum Bestimmen, ob ein tatsächlicher Öffnungsbetrag des Ladedruckregelventils (54) von einem regulären Öffnungsbetrag abweicht, der erreicht wird, wenn das Ladedruckregelventil korrekt funktioniert, **dadurch gekennzeichnet, daß** das Ventil umfaßt:

einen regelbaren Ventilmechanismus (40), mit dem eine Art des Öffnens und Schließens eines Motorventils (21, 31) eingestellt wird, und

ein Steuermittel zum Steuern des regelbaren Ventilmechanismus (40), wobei dann, wenn das Bestimmungsmittel feststellt, daß der tatsächliche Öffnungsbetrag des Ladedruckregelventils (54) von dem regulären Öffnungsbetrag abweicht, mit dem Steuermittel der regelbare Ventilmechanismus (40) in einer solchen Art gesteuert wird, daß ein Druck des aus der Verbrennungskammer (12) abgelassenen Abgases einem Druck des Abgases nahekommt, den dieses aufweist, wenn der tatsächliche Öffnungsbetrag des Ladedruckregelventils (54) mit dem regulären Öffnungsbetrag übereinstimmt.

2. Verbrennungskraftmaschine nach Anspruch 1, wobei dann, wenn das Bestimmungsmittel feststellt, daß der tatsächliche Öffnungsbetrag des Ladedruckregelventils kleiner als der reguläre Öffnungsbetrag ist, mit dem Steuermittel der regelbare Ventilmechanismus in einer solchen Art gesteuert wird, daß der Druck des aus der Verbrennungskammer abgelassenen Abgases abnimmt.

3. Verbrennungskraftmaschine nach Anspruch 2, wobei:

dann, wenn nicht festgestellt wird, daß der tatsächliche Öffnungsbetrag des Ladedruckregelventils kleiner als der reguläre Öffnungsbetrag ist, mit dem Steuermittel der regelbare Ventilmechanismus gemäß einer vorgesehenen Art des Öffnens und Schließens des Motorventils gesteuert wird, die beruhend auf einem Betriebszustand des Motors errechnet wird, und

dann, wenn festgestellt wird, daß der tatsächliche Öffnungsbetrag des Ladedruckregelventils kleiner als der reguläre Öffnungsbetrag ist, mit dem Steuermittel die vorgesehene Art des Öffnens und Schließens des Motorventils in einer solchen Art korrigiert wird, daß der Druck des aus der Verbrennungskammer abgelassenen Abgases abnimmt und der regelbare Ventilmechanismus gemäß der korrigierten, vorgesehenen Art des Öffnens und Schließens des Motorventils gesteuert wird.

4. Verbrennungskraftmaschine nach Anspruch 3, wobei:

der regelbare Ventilmechanismus ein Zeitsteuereinstellmechanismus für ein Ansaugventil ist, mit dem der Schließzeittakt eines Ansaugventils eingestellt wird, der als die Art des Öffnens und Schließens des Motorventils benutzt wird, und

dann, wenn festgestellt wird, daß der tatsächliche Öffnungsbetrag des Ladedruckregelventils kleiner als der reguläre Öffnungsbetrag ist, mit dem Steuermittel der Schließzeittakt des Ansaugventils in Bezug auf den vorgesehenen Schließzeittakt vorverlegt wird, der beruhend auf dem Betriebszustand des Motors berechnet wird, und der Zeitsteuereinstellmechanismus für das Ansaugventil gemäß dem korrigierten, vorgesehenen Schließzeittakt gesteuert wird.

5. Verbrennungskraftmaschine nach Anspruch 3 oder 4, wobei:

der regelbare Ventilmechanismus ein Zeitsteuereinstellmechanismus für ein Absaugventil ist, mit dem der Schließzeittakt eines Absaugventils eingestellt wird, der als die Art des Öffnens und Schließens des Motorventils benutzt wird, und

dann, wenn festgestellt wird, daß der tatsächliche Öffnungsbetrag des Ladedruckregelventils kleiner als der reguläre Öffnungsbetrag ist, mit dem Steuermittel der Schließzeittakt des Absaugventils in Bezug auf den vorgesehenen Schließzeittakt verzögert wird, der beruhend auf dem Betriebszustand des Motors berechnet wird, und der Zeitsteuereinstellmechanismus des Absaugventils gemäß dem korrigierten, vorgesehenen Schließzeittakt gesteuert wird, wodurch ein Ventilüberlappungszeitraum vergrößert wird, in dem das Absaugventil und das Ansaugventil beide offen sind.

6. Verbrennungskraftmaschine nach Anspruch 3 oder 4, wobei:

der regelbare Ventilmechanismus ein Zeitsteuereinstellmechanismus für ein Absaugventil ist, mit dem der Schließzeittakt eines Absaugventils eingestellt wird, der als die Art des Öffnens und Schließens des Motorventils benutzt wird, und

dann, wenn festgestellt wird, daß der tatsächliche Öffnungsbetrag des Ladedruckregelventils kleiner als der reguläre Öffnungsbetrag ist, mit dem Steuermittel der Schließzeittakt des Absaugventils in Bezug auf den vorgesehenen Schließzeittakt vorverlegt wird, der beruhend auf dem Betriebszustand des Motors berechnet wird, und der Zeitsteuereinstellmechanismus des Absaugventils gemäß dem korrigierten, vorgesehenen Schließzeittakt gesteuert wird.

7. Verbrennungskraftmaschine nach Anspruch 1, wobei dann, wenn das Bestimmungsmittel feststellt, daß der tatsächliche Öffnungsbetrag des Ladedruckregelventils größer als der reguläre Öffnungsbetrag ist, mit dem Steuermittel der regelbare Ventilmechanismus in einer solchen Art gesteuert wird, daß der Druck des aus der Verbrennungskammer abgelassenen Abgases zunimmt.

8. Verbrennungskraftmaschine nach Anspruch 7, wobei:

dann, wenn nicht festgestellt wird, daß der tatsächliche Öffnungsbetrag des Ladedruckregelventils größer als der reguläre Öffnungsbetrag ist, mit dem Steuermittel der regelbare Ventilmechanismus gemäß einer vorgesehenen Art des Öffnens und Schließens des Motorventils gesteuert wird, die beruhend auf einem Betriebszustand des Motors errechnet wird, und

dann, wenn festgestellt wird, daß der tatsächliche Öffnungsbetrag des Ladedruckregelventils größer als der reguläre Öffnungsbetrag ist, mit dem Steuermittel die vorgesehene Art des Öffnens und Schließens des Motorventils in einer solchen Art gesteuert wird, daß der Druck des aus der Verbrennungskammer abgelassenen Abgases zunimmt, und der regelbare Ventilmechanismus gemäß der korrigierten, vorgesehenen Art des Öffnens und Schließens des Motorventils gesteuert wird.

9. Verbrennungskraftmaschine nach Anspruch 8, wobei:

der regelbare Ventilmechanismus ein Zeitsteuereinstellmechanismus für ein Ansaugventil ist, mit dem der Schließzeittakt eines Ansaugventils eingestellt wird, der als die Art des Öffnens und Schließens des Motorventils benutzt wird, und

dann, wenn festgestellt wird, daß der tatsächliche Öffnungsbetrag des Ladedruckregelventils größer als der reguläre Öffnungsbetrag ist, mit dem Steuermittel der Schließzeittakt des Ansaugventils in Bezug auf den vorgesehenen Schließzeittakt verzögert wird, der beruhend auf dem Betriebszustand des Motors berechnet wird, und der Zeitsteuereinstellmechanismus für das Ansaugventil gemäß dem korrigierten, vorgesehenen Schließzeittakt gesteuert wird.

10. Verfahren zum Steuern einer Verbrennungskraftmaschine, umfassend einen Turbolader, der von Abgas getrieben wird und die in eine Verbrennungskammer eingesaugte Luft komprimiert, einen Umgehungskanal, durch den hindurch das Abgas beim Durchströmen eines Absaugkanals den Turbolader umgeht, und ein Ladedruckregelventil, das in dem Umgehungskanal vorgesehen ist und eine Strömungsdurchlaßfläche des Umgehungskanals einstellt, **gekennzeichnet durch** Umfassen des:

Bestimmens, ob ein tatsächlicher Öffnungsbetrag des Ladedruckregelventils von einem regulären Öffnungsbetrag abweicht, der erreicht wird, wenn das Ladedruckregelventil korrekt funktioniert, und

wenn festgestellt wird, daß der tatsächliche Öffnungsbetrag des Ladedruckregelventils von dem regulären Öffnungsbetrag abweicht, das Einstellen einer Art des Öffnens und Schließens eines Motorventils in einer solchen Weise, daß ein Druck des aus der Verbrennungskammer abgelassenen Abgases einem Druck des Abgases nahekommt, den dieses aufweist, wenn der tatsächliche Öffnungsbetrag des Ladedruckregelventils mit dem regulären Öffnungsbetrag übereinstimmt.

11. Verfahren nach Anspruch 10, wobei dann, wenn festgestellt wird, daß der tatsächliche Öffnungsbetrag des Ladedruckregelventils kleiner als der reguläre Öffnungsbetrag ist, die Art des Öffnens und Schließens des Motorventils in einer solchen Weise eingestellt wird, daß der Druck des aus der Verbrennungskammer abgelassenen Abgases abnimmt.

12. Verfahren nach Anspruch 11, wobei:

dann, wenn nicht festgestellt wird, daß der tatsächliche Öffnungsbetrag des Ladedruckregelventils kleiner als der reguläre Öffnungsbetrag ist, die Art des Öffnens und Schließens des Motorventils gemäß einer vorgesehenen Art des Öffnens und Schließens des Motorventils eingestellt wird, die beruhend auf einem Betriebszustand des Motors berechnet wird, und

dann, wenn festgestellt wird, daß der tatsächliche Öffnungsbetrag des Ladedruckregelventils kleiner als der reguläre Öffnungsbetrag ist, die vorgesehene Weise des Öffnens und Schließens des Motorventils in einer solchen Weise korrigiert wird, daß der Druck des aus der Verbrennungskammer abgelassenen Abgases abnimmt und die Art des Öffnens und Schließens des Motorventils gemäß der korrigierten, vorgesehenen Art des Öffnens und Schließens des Motorventils eingestellt wird.

13. Verfahren nach Anspruch 10, wobei dann, wenn festgestellt wird, daß der tatsächliche Öffnungsbetrag des Ladedruckregelventils größer als der reguläre Öffnungsbetrag ist, die Art des Öffnens und Schließens des Motorventils in einer solchen Weise eingestellt wird, daß der Druck des aus der Verbrennungskammer abgelassenen Abgases zunimmt.

14. Verfahren nach Anspruch 13, wobei:

dann, wenn nicht festgestellt wird, daß der tatsächliche Öffnungsbetrag des Ladedruckregelventils größer als der reguläre Öffnungsbetrag ist, die Art des Öffnens und Schließens des Motorventils gemäß einer vorgesehenen Art des Öffnens und Schließens des Motorventils eingestellt wird, die beruhend auf einem Betriebszustand des Motors berechnet wird, und

wenn festgestellt wird, daß der tatsächliche Öffnungsbetrag des Ladedruckregelventils größer als der reguläre Öffnungsbetrag ist, die vorgesehene Art des Öffnens und Schließens des Motorventils in einer solchen Weise korrigiert wird, daß der Druck des aus der Verbrennungskammer abgelassenen Abgases zunimmt und die Art des Öffnens und Schließens des Motorventils gemäß der korrigierten, vorgesehenen Art des Öffnens und Schließens des Motorventils eingestellt wird.

**Revendications**

1. Moteur (10) à combustion interne qui comprend un turbocompresseur (50) qui est entraîné par les gaz d'échappement et qui comprime de l'air qui est admis dans une chambre de combustion (12), un conduit (53) de contournement par lequel les gaz d'échappement contournent le turbocompresseur (50) lorsqu'ils s'écoulent dans un conduit d'échappement, une soupape (54) de réglage de suralimentation qui est disposée dans le conduit de contournement et qui ajuste une section d'écoulement du conduit de contournement et un moyen (65, 70) de détermination destiné à déterminer si la valeur réelle d'ouverture de la soupape (54) de réglage de suralimentation s'écarte d'une valeur normale d'ouverture qui est atteinte lorsque la soupape de réglage de suralimentation opère correctement, **caractérisé en ce qu'**il comprend :

   un mécanisme (40) de distribution réglable qui ajuste la manière d'ouvrir et de fermer une soupape (21, 31) de moteur ; et

   un moyen de commande destiné à commander le mécanisme (40) de distribution réglable, dans lequel, lorsque le moyen de détermination détermine que la valeur réelle d'ouverture de la soupape (54) de réglage de suralimentation s'écarte de la valeur normale d'ouverture, le moyen de commande commande le mécanisme (40) de distribution réglable de façon que la pression des gaz d'échappement qui sont évacués de la chambre (12) de combustion approche une pression des gaz d'échappement qui s'établit lorsque la valeur réelle d'ouverture de la soupape (54) de réglage de suralimentation concorde avec la valeur normale d'ouverture.

2. Moteur à combustion interne selon la revendication 1, dans lequel, lorsque le moyen de détermination déterminé que la valeur réelle d'ouverture de la soupape de réglage de suralimentation est plus petite que la valeur normale d'ouverture, le moyen de commande commande le mécanisme de distribution réglable de façon que la pression des gaz d'échappement qui sont évacués de la chambre de combustion diminue.

3. Moteur à combustion interne selon la revendication 2,
   dans lequel, lorsqu'il n'est pas déterminé que la valeur réelle d'ouverture de la soupape de réglage de suralimentation est plus petite que la valeur normale d'ouverture, le moyen de commande commande le mécanisme de distribution réglable en se basant sur une manière cible d'ouvrir et de fermer la soupape de moteur, qui est calculée en se basant sur l'état de fonctionnement du moteur, et
   dans lequel, lorsqu'il est déterminé que la valeur réelle d'ouverture de la soupape de réglage de suralimentation est plus petite que la valeur normale d'ouverture, le moyen de commande corrige la manière cible d'ouvrir et de fermer la soupape de moteur de telle manière que la pression des gaz d'échappement qui sont évacués de la chambre de combustion diminue, et commande le mécanisme de distribution réglable en se basant sur la manière cible corrigée d'ouvrir et de fermer la soupape de moteur.

4. Moteur à combustion interne selon la revendication 3,
   dans lequel le mécanisme de distribution réglable est un mécanisme d'ajustement de cadencement de soupape d'admission qui ajuste le cadencement de fermeture d'une soupape d'admission, qui est utilisé en tant que la manière d'ouvrir et de fermer la soupape de moteur, et
   dans lequel, lorsqu'il est déterminé que la valeur réelle d'ouverture de la soupape de réglage de suralimentation est plus petite que la valeur normale d'ouverture, le moyen de commande avance le cadencement de fermeture de la soupape d'admission par rapport à un cadencement cible de fermeture qui est calculé en se basant sur l'état de fonctionnement du moteur, et commande le mécanisme d'ajustement de cadencement de soupape d'admission en se basant sur le cadencement cible corrigé de fermeture.

5. Moteur à combustion interne selon la revendication 3 ou 4,

dans lequel le mécanisme de distribution réglable est un mécanisme d'ajustement de cadencement de soupape d'échappement qui ajuste le cadencement de fermeture d'une soupape d'échappement, qui est utilisé en tant que la manière d'ouvrir et de fermer la soupape de moteur, et

dans lequel, lorsqu'il est déterminé que la valeur réelle d'ouverture de la soupape de réglage de suralimentation est plus petite que la valeur normale d'ouverture, le moyen de commande retarde le cadencement de fermeture de la soupape d'échappement par rapport à un cadencement cible de fermeture qui est calculé en se basant sur l'état de fonctionnement du moteur et commande le mécanisme d'ajustement de cadencement de soupape d'échappement en se basant sur le cadencement cible corrigé de fermeture, en augmentant ainsi la période de croisement des soupapes dans laquelle la soupape d'échappement et la soupape d'admission sont toutes les deux ouvertes.

**6.** Moteur à combustion interne selon la revendication 3 ou 4.

dans lequel le mécanisme de distribution réglable est un mécanisme d'ajustement de cadencement de soupape d'échappement qui ajuste le cadencement de fermeture d'une soupape d'échappement, qui est utilisé en tant que la manière d'ouvrir et de fermer la soupape de moteur, et

dans lequel, lorsqu'il est déterminé que la valeur réelle d'ouverture de la soupape de réglage de suralimentation est plus petite que la valeur normale d'ouverture, le moyen de commande avance le cadencement de fermeture de la soupape d'échappement par rapport à un cadencement cible de fermeture qui est calculé en se basant sur l'état de fonctionnement du moteur, et commande le mécanisme d'ajustement de cadencement de soupape d'échappement en se basant sur le cadencement cible corrigé de fermeture.

**7.** Moteur à combustion interne selon la revendication 1, dans lequel, lorsque le moyen de détermination détermine que la valeur réelle d'ouverture de la soupape de réglage de suralimentation est plus grande que la valeur normale d'ouverture, le moyen de commande commande le mécanisme de distribution réglable de façon que la pression des gaz d'échappement qui sont évacués de la chambre de combustion augmente.

**8.** Moteur à combustion interne selon la revendication 7,

dans lequel, lorsqu'il n'est pas déterminé que la valeur réelle d'ouverture de la soupape de réglage de suralimentation est plus grande que la valeur normale d'ouverture, le moyen de commande commande le mécanisme de distribution réglable en se basant sur une manière cible d'ouvrir et de fermer la soupape de moteur, qui est calculée en se basant sur l'état de fonctionnement du moteur, et

dans lequel, lorsqu'il est déterminé que la valeur réelle d'ouverture de la soupape de réglage de suralimentation est plus grande que la valeur normale d'ouverture, le moyen de commande corrige la manière cible d'ouvrir et de fermer la soupape de moteur de telle manière que la pression des gaz d'échappement qui sont évacués de la chambre de combustion augmente, et commande le mécanisme de distribution réglable en se basant sur la manière cible corrigée d'ouvrir et de fermer la soupape de moteur.

**9.** Moteur à combustion interne selon la revendication 8,

dans lequel le mécanisme de distribution réglable est un mécanisme d'ajustement de cadencement de soupape d'admission qui ajuste le cadencement de fermeture d'une soupape d'admission, qui est utilisé en tant que la manière d'ouvrir et de fermer la soupape de moteur, et

dans lequel, lorsqu'il est déterminé que la valeur réelle d'ouverture de la soupape de réglage de suralimentation est plus grande que la valeur normale d'ouverture, le moyen de commande retarde le cadencement de fermeture de la soupape d'admission par rapport à un cadencement cible de fermeture, qui est calculé en se basant sur l'état de fonctionnement du moteur, et commande le mécanisme d'ajustement de cadencement de soupape d'admission en se basant sur le cadencement cible corrigé de fermeture.

**10.** Procédé de commande d'un moteur à combustion interne qui comprend un turbocompresseur qui est entraîné par les gaz d'échappement et qui comprime de l'air qui est admis dans une chambre de combustion, un conduit de contournement par lequel les gaz d'échappement contournent le turbocompresseur lorsqu'ils s'écoulent dans un conduit d'échappement, une soupape de réglage de suralimentation qui est disposée dans le conduit de contournement et qui ajuste la section de conduit d'écoulement du conduit de contournement, **caractérisé en ce qu'**il comprend :

le fait de déterminer si la valeur réelle d'ouverture de la soupape de réglage de suralimentation s'écarte d'une valeur normale d'ouverture qui est atteinte lorsque la soupape de réglage de suralimentation opère correctement ; et

le fait d'ajuster, lorsqu'il est déterminé que la valeur réelle d'ouverture de la soupape de réglage de suralimentation s'écarte de la valeur normale d'ouverture, une manière d'ouvrir et de fermer une soupape de moteur de façon que la pression des gaz d'échappement qui sont évacués de la chambre de combustion approche une pression des gaz d'échappement qui s'établit lorsque la valeur réelle d'ouverture de la soupape de réglage de suralimentation concorde avec la valeur normale d'ouverture.

11. Procédé selon la revendication 10, dans lequel, lorsqu'il est déterminé que la valeur réelle d'ouverture de la soupape de réglage de suralimentation est plus petite que la valeur normale d'ouverture, la manière d'ouvrir et de fermer la soupape de moteur est ajustée de façon que la pression des gaz d'échappement qui sont évacués de la chambre de combustion diminue.

12. Procédé selon la revendication 11,
dans lequel, lorsqu'il n'est pas déterminé que la valeur réelle d'ouverture de la soupape de réglage de suralimentation est plus petite que la valeur normale d'ouverture, la manière d'ouvrir et de fermer la soupape de moteur est ajustée en se basant sur une manière cible d'ouvrir et de fermer la soupape de moteur, qui est calculée en se basant sur l'état de fonctionnement du moteur, et
dans lequel, lorsqu'il est déterminé que la valeur réelle d'ouverture de la soupape de réglage de suralimentation est plus petite que la valeur normale d'ouverture, la manière cible d'ouvrir et de fermer la soupape de moteur est corrigée de telle manière que la pression des gaz d'échappement qui sont évacués de la chambre de combustion diminue, et la manière d'ouvrir et de fermer la soupape de moteur est ajustée en se basant sur la manière cible corrigée d'ouvrir et de fermer la soupape de moteur.

13. Procédé selon la revendication 10, dans lequel, lorsqu'il est déterminé que la valeur réelle d'ouverture de la soupape de réglage de suralimentation est plus grande que la valeur normale d'ouverture, la manière d'ouvrir et de fermer la soupape de moteur est ajustée de façon que la pression des gaz d'échappement qui sont évacués de la chambre de combustion augmente.

14. Procédé selon la revendication 13,
dans lequel, lorsqu'il n'est pas déterminé que la valeur réelle d'ouverture de la soupape de réglage de suralimentation est plus grande que la valeur normale d'ouverture, la manière d'ouvrir et de fermer la soupape de moteur est ajustée en se basant sur une manière cible d'ouvrir et de fermer la soupape de moteur, qui est calculée en se basant sur l'état de fonctionnement du moteur, et
dans lequel, lorsqu'il est déterminé que la valeur réelle d'ouverture de la soupape de réglage de suralimentation est plus grande que la valeur normale d'ouverture, la manière cible d'ouvrir et de fermer la soupape de moteur est corrigée de telle manière que la pression des gaz d'échappement qui sont évacués de la chambre de combustion augmente, et la manière d'ouvrir et de fermer la soupape de moteur est ajustée en se basant sur la manière cible corrigée d'ouvrir et de fermer la soupape de moteur.

# FIG.1

# FIG.2

VALVE LIFT AMOUNT

EXHAUST VALVE

INTAKE VALVE

FULL RETARD POSITION INVTS

ΔINVT

IVOA

IVOA

IVO1 IVO2          IVC1 IVC2

← ADVANCED     CRANK ANGLE     RETARDED →

# FIG.3

VALVE LIFT AMOUNT

FULL ADVANCE POSITION EXVTS

EXHAUST VALVE

INTAKE VALVE

ΔEXVT

EVOA

EVOA

EVO1 EVO2          EVC1 EVC2

← ADVANCED     CRANK ANGLE     RETARDED →

# F I G . 4

VALVE TIMING
CONTROL ROUTINE

CALCULATE BASE ADVANCE
ANGLE ΔINVTb FOR INTAKE
VALVE AND BASE RETARDATION — S101
ANGLE ΔEXVTb FOR EXHAUST
VALVE BASED ON CURRENT
ENGINE OPERATING STATE

S102

IS
WASTEGATE          NO
VALVE UNABLE TO
OPEN ?

YES    S103                    S104

TARGET ADVANCE ANGLE          TARGET ADVANCE ANGLE
ΔINVTT FOR INTAKE VALVE       ΔINVTT FOR INTAKE VALVE
← ΔINVTb + ΔKIN                  ← ΔINVTb
TARGET RETARDATION ANGLE      TARGET RETARDATION ANGLE
ΔEXVTT FOR EXHAUST VALVE      ΔEXVTT FOR EXHAUST VALVE
← ΔEXVTb + ΔKEX                  ← ΔEXVTb

END

# FIG.5

VALVE LIFT AMOUNT

EXHAUST VALVE

INTAKE VALVE

FULL RETARD POSITION INVTS

ΔKIN

ΔINVTb

ΔINVTT

IVOT  IVOb

IVCT  IVCb

◄— ADVANCED     CRANK ANGLE     RETARDED —►

# FIG.6

VALVE LIFT AMOUNT

FULL ADVANCE POSITION EXVTS

EXHAUST VALVE

INTAKE VALVE

ΔEXVTb

ΔKEX

ΔEXVTT

VALVE OVERLAP PERIOD

EVOb

EVOT

IVOT  EVCb

EVCT

◄— ADVANCED     CRANK ANGLE     RETARDED —►

# FIG.7

```
        ┌─────────────────────┐
        │   VALVE TIMING       │
        │  CONTROL ROUTINE     │
        └─────────────────────┘
                  │
                  ▼
    ┌───────────────────────────┐
    │  CALCULATE BASE ADVANCE   │
    │   ANGLE ΔINVTb FOR INTAKE │
    │ VALVE AND BASE RETARDATION│──── S201
    │  ANGLE ΔEXVTb FOR EXHAUST │
    │   VALVE BASED ON CURRENT  │
    │  ENGINE OPERATING STATE   │
    └───────────────────────────┘
                  │
                  ▼         S202
              ╱───────╲
             ╱   IS     ╲
            ╱ WASTEGATE  ╲    NO
           ⟨ VALVE UNABLE TO ⟩─────────────────┐
            ╲   CLOSE?   ╱                       │
             ╲─────────╱                         │
                  │ YES    S203          S204    │
                  ▼                              ▼
    ┌───────────────────────────┐  ┌───────────────────────────┐
    │   TARGET ADVANCE ANGLE    │  │   TARGET ADVANCE ANGLE    │
    │ ΔINVTT FOR INTAKE VALVE ← │  │ ΔINVTT FOR INTAKE VALVE ← │
    │     ΔINVTb - ΔLIN         │  │      ΔINVTb               │
    │ TARGET RETARDATION ANGLE  │  │ TARGET RETARDATION ANGLE  │
    │ ΔEXVTT FOR EXHAUST VALVE  │  │ ΔEXVTT FOR EXHAUST VALVE  │
    │     ← ΔEXVTb - ΔLEX       │  │      ← ΔEXVTb             │
    └───────────────────────────┘  └───────────────────────────┘
                  │                              │
                  ▼◄─────────────────────────────┘
             ┌─────────┐
             │   END   │
             └─────────┘
```

# FIG.8

VALVE LIFT
AMOUNT

EXHAUST
VALVE

INTAKE
VALVE

FULL RETARD
POSITION
INVTS

Δ INVTb

Δ LIN Δ INVTT

IVOb IVOT

IVCb IVCT

← ADVANCED     CRANK ANGLE     RETARDED →

**EP 2 107 225 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004019449 A